# EUROPEAN PATENT APPLICATION

(11) **EP 2 743 240 A2**
(43) Date of publication of application: **18.06.2014**
(21) Application number: 12821580.3
(22) Date of filing: 06.08.2012
(51) Int. Cl.: C03C 27/12, C03B 23/24, E06B 3/66, B32B 17/00

(54) **HEAT-STRENGTHENED VACUUM GLASS**

(30) Priority: 11.08.2011 KR 20110080341
(71) Applicant: LG Hausys, Ltd., Seoul 150-876 (KR)
(72) Inventor: SON, Beom Goo, Suwon-si Gyeonggi-do 441-460 (KR); SONG, Su Bin, Uiwang-si Gyeonggi-do 437-080 (KR); JUN, Youn Ki, Gwancheon-si Gyeonggi-do 427-739 (KR)
(74) Representative: von Puttkamer · Berngruber
(86) International application number: PCT/KR2012/006219
(87) International publication number: WO 2013/022239

(57) **Abstract**

Provided is a heat-strengthened vacuum glass, comprising: a plurality of sheet glasses spaced apart by a predetermined interval; a plurality of spacers interposed between the sheet glasses to maintain the intervals between the sheet glasses; and a sealing material arranged along edges of the sheet glasses to seal and bond the sheet glasses. The heat-strengthened vacuum glass of the present invention has a surface compressive stress of 20 Mpa to 55 Mpa after the seal bonding of the sheet glasses, thus ensuring high thermal resistance, high strength, and, when damaged, high stability.

## Description

### [Technical Field]

The present invention relates to a vacuum glass, and more particularly, to a heat-strengthened vacuum glass which has a surface compressive stress of 20 MPa to 55 MPa.

### [Background Art]

In buildings, energy consumed in heating and cooling occupies about 25 percent of total energy consumption.

Further, energy loss through windows and doors reaches about 35% of total energy consumption. This is because the windows and doors have a coefficient of overall heat transmission 2 to 5 times higher than those of walls or roofs and are thus the weakest part of an outer cover of the building in terms of thermal insulation. Accordingly, it has been required to develop windows and doors excellent in thermal insulation with a coefficient of overall heat transmission similar to those of the walls in terms of nationwide energy conservation as well as energy conservation in buildings.

In general, a window or door includes a frame forming a shape of the window or door, and a glass sheet coupled to the frame. In the window or door, thermal energy generally leaks through the glass sheet that occupies the largest area of the window or door. Accordingly, a vacuum glass capable of significantly reducing leakage of thermal energy has been spotlighted.

A vacuum glass includes a vacuum layer between two panes and can minimize thermal loss due to conduction, convection and radiation of gas when used together with a low-E glass. In the case where such vacuum glass is used for a window of a high-rise building, strength and insulating performance of the vacuum glass become important factors.

In the vacuum glass, a breakage state may also be considered along with strength. High strength glass is divided into tempered glass and heat-strengthened glass according to surface compressive stress. Considering a breakage state of such high strength glass, the tempered glass generates lots of glass shards upon breakage, and the broken glass shards can be scattered and fall when applied to a high-rise building, thereby providing an unsafe situation. However, the heat-strengthened glass generates less glass shards, which are not separated from each other, upon breakage, and thus is suitable for high-rise buildings.

### [Disclosure]

### [Technical Problem]

An aspect of the present invention is to provide a heat-strengthened vacuum glass having thermal insulation, high strength, and stability upon breakage.

### [Technical Solution]

In accordance with an aspect of the present invention, a heat-strengthened vacuum glass includes: a plurality of panes spaced with a predetermined distance from each other; a plurality of spacers interposed between the panes to maintain the distance between the panes; and a sealing material disposed along edges of the panes to seal and bond the panes, wherein the pane has a surface compressive stress of 20 MPa to 55 MPa after the panes are bonded to each other.

The pane may have a surface compressive stress of 40 MPa to 160 MPa before bonding.

The sealing material may include low-melting point glass having a melting point of 440°C to 460°C, which may be composed of glass powder including: 70.0% by weight (wt%) to 80.0 wt% of Bi₂O₃; 5.0 wt% or less of SiO₂; 5.0 wt% to 15.0 wt% of B₂O₃; 5.0 wt% or less of Al₂O₃; 10.0 wt% to 15.0 wt% of ZnO + BaO; and 5.0 wt% or less of a pigment.

### [Advantageous Effects]

According to the present invention, a space between the panes of the heat-strengthened glass is sealed with low-melting point glass having a predetermined melting point, thereby ensuring not only high thermal resistance and high strength, but also high stability upon breakage.

### [Description of Drawings]

Fig. 1 is a cross-sectional view of a heat-strengthened vacuum glass according to one embodiment of the present invention;
Fig. 2 is a plan view of the heat-strengthened vacuum glass according to the embodiment of the present invention;
Fig. 3 is a graph showing test results of surface compressive stress of a heat-strengthened vacuum glass according to the present invention; and
Fig. 4 is a graph showing test results of residual rate of surface compressive stress of the heat-strengthened vacuum glass according to one embodiment of the present invention before and after a heating process.

### <Description of Reference Numerals>

100: Pane
110: Vent hole
200: Sealing material
300: Spacer

### [Best Mode]

The above and other aspects, features, and advantages of the present invention will become apparent from the detailed description of the following embodiments in conjunction with the accompanying drawings. It should be understood that the present invention is not limited to the following embodiments and may be embodied in different ways, and that the embodiments are provided for complete disclosure and thorough understanding of the present invention by those skilled in the art. The scope of the present invention is defined only by the claims. Like elements will be denoted by like reference numerals throughout the specification.

Further, the sizes of the elements that constitute the embodiments in the drawings may be exaggerated for clarity. If a certain element is described as being "disposed in" or "connected to" another element, the certain element may be in contact with or spaced with a predetermined distance from the other element. When the elements are spaced with a predetermined distance from each other, a description of a third element for fastening or connecting the elements to each other can be omitted.

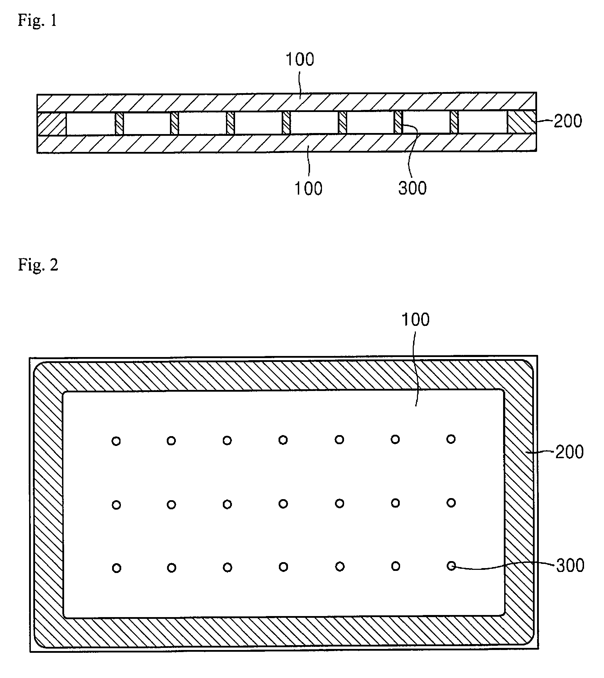

Fig. 1 is a cross-sectional view of a heat-strengthened vacuum glass according to one embodiment of the present invention, and Fig. 2 is a plan view of the heat-strengthened vacuum glass according to the embodiment of the invention.

Prior to the description of the heat-strengthened vacuum glass according to this embodiment, a typical vacuum glass will be briefly described.

The vacuum glass includes a plurality of panes 100, a sealing material 200, and a plurality of spacers 300. The spacers 300 are interposed between the panes 100 to maintain the distance between the panes. The sealing material 200 is applied to edges of the panes 100 to seal an inner space between the panes 100 in order to prevent external gas from entering the inner space, and the inner space is evacuated through an exhaust hole formed at an upper portion of the pane 100. After evacuation, the exhaust hole is sealed to keep the inner space in a vacuum.

After the panes are sealed and bonded to each other, the panes of the heat-strengthened vacuum glass have a surface compressive stress of 20 MPa to 55 MPa.

The feature in that the surface compressive stress of the panes 100 ranges from 20 MPa to 55 MPa provides wind pressure resistance required for high-rise buildings, and makes it difficult for glass shards generated upon breakage by unexpected external force to be separated from a window frame even in the event where the glass shards are broken into a triangular shape from a shock point, thereby providing high stability when used for high-rise buildings.

If the surface compressive stress is less than 20 MPa, it does not satisfy performance required of the heat-strengthened glass, thereby providing low wind pressure resistance, which is not suitable for high-rise buildings. If the surface compressive stress exceeds 55 MPa, lots of small glass shards are scattered over pedestrians below a building when damaged, seriously threatening pedestrian safety and thus being unsuitable for high-rise buildings.

In order to adjust the surface compressive stress of the panes 100 in the range from 20 MPa to 55 MPa, a process of manufacturing the heat-strengthened vacuum glass needs to be first understood.

In manufacture of the heat-strengthened vacuum glass, a sealing material 200 is applied to one side of one of two heat-strengthened glass panes 100 in order to seal the space between the two panes 100.

After one heat-strengthened glass pane is attached to another heat-strengthened glass pane, to which the sealing material has already been applied, the panes are subjected to a heating process at high temperature to melt the sealing material for sealing the two panes. During the heating process at high temperature, the heat-strengthened glass panes are annealed, thereby partially releasing and reducing the surface compressive stress of the panes. Thus, in order to adjust the surface compressive stress of the heat-strengthened glass panes 100 to at least 20 MPa after sealing and bonding therebetween, the heating process is not performed at excessively high temperature.

The heating process is a process of melting the sealing material 200 for sealing and bonding between the panes 100, and thus is performed above a melting point of the sealing material 200. Thus, when the melting point of the sealing material is lowered, the heating temperature during the heating process can also be reduced.

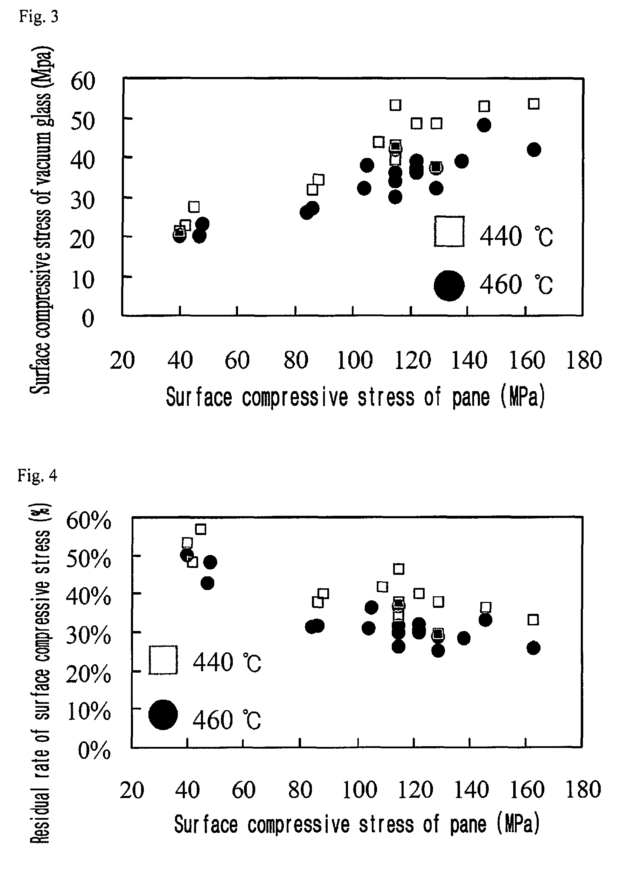

Fig. 3 is a graph showing test results of surface compressive stress of the heat-strengthened vacuum glass. Referring to Fig. 3, it can be seen that decrement in surface compressive stress varies depending upon temperature in the heating process and original surface compressive stress of the pane before bonded to another pane.

In order to adjust the surface compressive stress of the heat-strengthened glass panes 100 to be in the range from 20 MPa to 55 MPa after sealing and bonding, the heating process may be performed at 440°C to 460°C. Thus, the heating process may be implemented using a sealing material 220 having a melting point from 440°C to 460°C. The sealing material 220 may include low-melting point glass having a melting point from 440°C to 460°C. The low-melting point glass may be formed of a glass compound that is melted and then solidified, wherein the glass compound includes at least one selected from the group consisting of, for example, an inorganic oxide, a metal oxide, and combinations thereof.

Specifically, the sealing material 220 may employ glass powder prepared by re-crushing the glass compound which is solidified after melting. For example, in order to facilitate application of the glass powder to one side of the pane 100, the glass powder may be formed as a paste compound, in which the glass powder is blended with an organic solvent. Subsequently, with the panes attached to each other, the organic solvent blended with the glass powder is removed by drying, followed by heating at high temperature to melt the glass powder.

If the melting point of the sealing material 220 exceeds 460°C, residual surface compressive stress, which has been created on the panes 100 by strengthening treatment, is released, allowing the panes to have strength below a desired value. If the melting point is less than 440°C, the panes have a higher surface compressive stress than desired strength, thereby causing deterioration in stability of the pane upon breakage.

In another embodiment, the sealing material 220 may include low-melting point glass as a glass compound, which has a melting point from 440°C to 460°C and does not contain lead (Pb) for eco-friendly application.

When the low-melting point glass contains Pb, the glass can have a relatively low melting point, and can cause serious toxicity to humans due to the presence of Pb.

An exemplary composition of a low-melting point glass compound (sealing material 220) that is a Pb-free material includes 70.0 wt% to 80.0 wt% of Bi₂O₃; optionally, 5.0 wt% or less of SiO₂; 5.0 wt% to 15.0 wt% of B₂O₃; optionally, 5.0 wt% or less of Al₂O₃₍₂₂₀₎; 10.0 wt% to 15.0 wt% of ZnO + BaO; and, optionally, 5.0 wt% or less of a pigment, wherein the glass compound may be used in, for example, powder form. The low-melting point glass with the composition may have a melting point ranging from 440°C to 460°C.

In order to adjust the surface compressive stress of the panes 100 in the range from 20 MPa to 55 MPa after sealing and bonding, the heat-strengthened glass panes 100 may have original surface compressive stress, i.e. a value before sealing and bonding, ranging, for example, from 40 MPa to 160 MPa.

If the original surface compressive stress of the panes 100 is less than 40 MPa, the panes have a surface compressive stress of less than 20 MPa, which does not satisfy strength requirement, when subjected to the high temperature heating process. In addition, if the original surface compressive stress exceeds 160 MPa, time and costs for surface treatment of the panes 100 increase and residual surface compressive stress exceeds 55 MPa as well, thereby deteriorating stability upon breakage.

Residual rate of surface compressive stress of the panes after sealing and bonding may range from 25 % to 60 %.

Next, a method of manufacturing a heat-strengthened vacuum glass according to one embodiment of the present invention will be described.

Prior to the description of the method according to the embodiment of the invention, a typical method of manufacturing a vacuum glass will be described in brief.

Spacers 300 are arranged on a pane 100 previously subjected to cleaning, and a sealing material 200 is deposited along a periphery of the pane 100. Another pane 100 is attached to an upper side of the pane 100 having the sealing material 200 deposited thereon, and the sealing material 200 is melted to seal an inner space between the panes 100 while bonding the panes 100 to each other.

To form a vacuum in the inner space between the sealed panes 100, the inner space is evacuated through an exhaust hole formed in the pane 100, followed by sealing the exhaust hole, thereby manufacturing a vacuum glass.

The method according to the present invention provides a heat-strengthened vacuum glass which has a surface compressive stress ranging from 20 MPa to 55 MPa, and includes following operations.

### (Application of Sealing Material)

In this operation, a sealing material 200 having a melting point ranging from 440°C to 460°C is applied to a pane such that the sealing material 200 can be melted later at a specific temperature from 440°C to 460°C. The sealing material 200 may include a lead-free low-melting point glass. This is because the lead (Pb)-free composition can prevent serious toxicity to humans even after extended use of the sealing material.

An exemplary lead-free sealing material 200 may employ glass powder, which includes 70.0 wt% to 80.0 wt% of Bi₂O₃; optionally, 5.0 wt% or less of SiO₂; 5.0 wt% to 15.0 wt% of B₂O₃; optionally, 5.0 wt% or less of Al₂O₃; 10.0 wt% to 15.0 wt% of ZnO + BaO; and, optionally, 5.0 wt% or less of a pigment.

The application operation may further include drying the sealing material 200 applied as a paste to the pane to remove unnecessary organic components, such as a binder and the like.

Next, another pane is attached to the pane to which the low-melting point glass has been applied (Attachment of panes).

With the panes attached to each other via the low-melting point glass interposed therebetween, the panes are heated to a temperature ranging from 440°C to 460°C in order to allow the panes to be sealed and bonded to each other by the sealing material (Sealing and bonding of panes).

In order to seal and bond the attached panes 100 with the sealing material 200, the sealing material, i.e. the low-melting point glass, is subjected to phase transformation into a molten state. Here, it must be taken into account that surface compressive stress of the panes 100 varies in response to increase in temperature. Thus, when taking into account the surface compressive stress of the panes 100 and the molten state of the sealing material 200, heating is preferably performed at a temperature ranging from 440°C to 460°C.

The sealing and bonding operation may further include cooling the sealing material 200 in order to maintain bonding strength of the panes 100 after sealing and bonding of the panes 100 with the melted sealing material 200. Here, the cooling temperature may vary depending upon the composition of the sealing material 200. For example, the cooling temperature may range from 360°C to 380°C for the lead-free low-melting point glass.

### [Mode for Invention]

### Examples

Next, the present invention will be explained in more detail with reference to some examples. However, it should be understood that these examples are provided for illustration only and are not to be in any way construed as limiting the present invention.

A description of details apparent to those skilled in the art will be omitted.

### Examples 1 and 2 and Comparative Examples 1 and 2

A heat-strengthened vacuum glass according to the present invention was manufactured as follows.

A pair of panes 100 was arranged in parallel in a thickness direction with spacers 300 interposed therebetween. The pair of panes was bonded to each other at peripheries thereof and hermetically sealed. An inner space between the panes 100 was set to a pressure of 1.0 x 10⁻³ torr or less.

Tens of panes 100 each having a thickness of 5 mm were prepared by heating the panes 100 to 675°C, which approaches a softening point thereof, followed by quenching to compress and deform surfaces thereof. For comparison with a heat-strengthened vacuum glass, which would be manufactured using the panes 100, surface compressive stress of the panes 100 was measured. As a result, the panes 100 had a surface compressive stress ranging from 40 MPa to 160 MPa.

As a sealing material 200, a lead-free low-melting point glass was used. The lead-free low-melting point glass had a composition including 75.5 wt% of Bi₂O₃; 2.5 wt% of SiO₂; 9.0 wt% of B₂O₃; 1.0 wt% of Al₂O₃; 12.5 wt% of ZnO + BaO; and 0 wt% of a pigment. The lead-free low-melting point glass had a melting point of 440°C and a glass transition temperature (Tg) of 330 °C.

The panes 100 attached to each other via the sealing material were heated to 440°C for sealing and bonding, and 14 heat-strengthened vacuum glass samples were prepared using dozens of the panes 100 prepared through the above process. Surface compressive stress of each of the heat-strengthened vacuum glass samples was measured and then compared with that of the panes 100 that were used to manufacture the heat-strengthened vacuum glass samples. Comparison results are shown in Fig. 3.

### Example 2

19 heat-strengthened vacuum glass samples were prepared in the same manner as in Example 1 except that the heating process was performed at a temperature of 460°C. Surface compressive stress of the heat-strengthened vacuum glass samples were measured and then compared with that of the panes 100 that were used to manufacture the heat-strengthened vacuum glass samples. Comparison results are shown in Fig. 3.

### Comparative Example 1

Several heat-strengthened vacuum glass samples were prepared in the same manner as in Example 1 except that the heating process was performed at a temperature of 390°C. Surface compressive stress of each of the heat-strengthened vacuum glass samples was measured.

### Comparative Example 2

Several heat-strengthened vacuum glass samples were prepared in the same manner as in Example 1 except that the heating process was performed at a temperature of 500°C. Surface compressive stress of each of the heat-strengthened vacuum glass samples was measured.

A minimum value, a maximum value, and an average value of surface compressive stress of the heat-strengthened vacuum glasses prepared in Examples 1 and 2 and Comparative Examples 1 and 2 are shown in Table 1.

**Table 1**

| | Heating Temp. (°C) | Surface Compressive Stress of Vacuum Glass (MPa) | | |
|---|---|---|---|---|
| | | Min. | Max. | Average |
| Comparative Example 1 | 390 | 28 | 116 | 75 |
| Example 1 | 440 | 21 | 53 | 40 |
| Example 2 | 460 | 20 | 48 | 34 |
| Comparative Example 2 | 500 | 2 | 10 | 6 |

Fig. 4 is a graph showing a residual rate (%) of surface compressive stress of each of the vacuum glass samples prepared in Examples 1 and 2, as calculated with respect to surface compressive stress of the panes used.

As could be seen from the results of Example 1 shown in Fig. 3, although the surface compressive stress of the heat-strengthened vacuum glass sample was decreased as compared with that of the panes 100 before heating, the average surface compressive stress thereof indicated 40 MPa, which satisfied a desired surface compressive stress of the heat-strengthened vacuum glass sample ranging from 20 MPa to 55 MPa.

As could be seen from the results of Example 2 shown in Fig. 3, although the surface compressive stress of the heat-strengthened vacuum glass sample was decreased as compared to that of the panes 100 before heating, the average surface compressive stress thereof indicated 34 MPa, which satisfied a desired surface compressive stress of the heat-strengthened vacuum glass sample ranging from 20 MPa to 55 MPa.

On the contrary, it could be seen that, in Comparative Examples 1 and 2, as a result of heating the samples to 390 °C and 500 °C, respectively, for 40 minutes, the average surface compressive stress of each of the vacuum glass samples indicated 75 MPa or 6 MPa, which did not satisfy a desired range.

In Comparative Example 2, the surface compressive stress of the heat-strengthened vacuum glass sample was checked when the heating temperature could not be lowered below 500°C since the sealing material has a melting point of 500°C. That is, it could be seen that the result of comparative example 2 shown in Table 2 was the surface compressive stress of the heat-strengthened vacuum glass sample upon heating to 500°C.

Table 2 shows numerical results of Fig. 4. Measurement results will be described with reference to Fig. 4 and Table 2.

**Table 2**

| | Heating Temp. (°C) | Residual Rate of Surface Compressive Stress (%) | | |
|---|---|---|---|---|
| | | Min. | Max. | Average |
| Example 1 | 440 | 29.2 | 56.8 | 40.7 |
| Example 2 | 460 | 25.1 | 50.0 | 32.9 |

As in Examples 1 and 2, when the panes 100 were heated to 440°C or 460°C for 40 minutes, the residual rate of the surface compressive stress of the panes 100 was measured to have a very good result satisfying a range from 25% to 60%.

Although some embodiments have been described herein with reference to the accompanying drawings, it should be understood that these embodiments are given by way of illustration only, and that various modifications, variations, and alterations can be made without departing from the spirit and scope of the present invention. Therefore, the scope of the present invention should be limited only by the accompanying claims and equivalents thereof.

## Claims

1. A heat-strengthened vacuum glass comprising:
a plurality of panes spaced with a predetermined distance from each other;
a plurality of spacers interposed between the panes to maintain the distance between the panes; and
a sealing material disposed along edges of the panes to seal and bond the panes,
wherein the pane has a surface compressive stress of 20 MPa to 55 MPa after the panes are sealed and bonded to each other.

2. The heat-strengthened vacuum glass according to claim 1, wherein the sealing material comprises low-melting point glass having a melting point ranging from 440°C to 460°C.

3. The heat-strengthened vacuum glass according to claim 2, wherein the sealing material is a Pb-free material.

4. The heat-strengthened vacuum glass according to claim 3, wherein the sealing material comprises a glass compound comprising: 70.0 wt% to 80.0 wt% of Bi₂O₃; 5.0 wt% or less of SiO₂; 5.0 wt% to 15.0 wt% of B₂O₃; 5.0 wt% or less of Al₂O₃; 10.0 wt% to 15.0 wt% of ZnO + BaO; and 5.0 wt% or less of a pigment.

5. The heat-strengthened vacuum glass according to claim 1, wherein the pane has a surface compressive stress ranging from 40 MPa to 160 MPa before the panes are sealed and bonded to each other.

6. The heat-strengthened vacuum glass according to claim 1, wherein the pane has a residual rate of surface compressive stress ranging from 25 % to 60 % after the panes are sealed and bonded to each other.

7. A method of manufacturing a heat-strengthened vacuum glass, comprising:
applying low-melting point glass as a sealing material to a pane along an edge thereof;
attaching another pane to the pane to which the low-melting point glass has been applied; and
sealing and bonding the attached panes by heating the attached panes to a temperature ranging from 440°C to 460°C to melt the low-melting point glass interposed between the panes,
wherein a surface compressive stress comes to 20 MPa to 55 MPa after the panes are sealed and bonded to each other.

8. The method according to claim 7, wherein the low-melting point glass is a Pb-free material.

9. The method according to claim 8, wherein the sealing material comprises glass powder comprising: 70.0 wt% to 80.0 wt% of Bi₂O₃; 5.0 wt% or less of SiO₂; 5.0 wt% to 15.0 wt% of B₂O₃; 5.0 wt% or less of Al₂O₃; 10.0 wt% to 15.0 wt% of ZnO + BaO; and 5.0 wt% or less of a pigment.

10. The method according to claim 7, wherein each of the pane is a heat-strengthened glass pane having a surface compressive stress ranging from 40 MPa to 160 MPa before the panes are sealed and bonded to each other.

11. The method according to claim 7, wherein the pane has a residual rate of surface compressive stress ranging from 25% to 60% after the panes are sealed and bonded to each other.
